# EUROPÄISCHE PATENTANMELDUNG

(11) **EP 2 261 575 A2**
(43) Veröffentlichungstag der Anmeldung: **15.12.2010**
(21) Anmeldenummer: 10161870.0
(22) Anmeldetag: 04.05.2010
(51) Int. Cl.: F24J 2/26

(54) **Absorber**

(30) Priorität: 10.06.2009 DE 202009008081 U
(71) Anmelder: SCHÜCO International KG, 33609 Bielefeld (DE)
(72) Erfinder: Rosenwirth, Andreas, 32130, Enger (DE); Hanke, Carsten, 33729, Bielefeld (DE)
(74) Vertreter: Dantz, Jan Henning

(57) **Zusammenfassung**

Absorber (1), der ein zumindest abschnittsweise ebenes bzw, eine ebene Fläche (8b) aufweisendes Absorberblech (2) aufweist, an dem - vorzugsweise mit wenigstens einem Wärmeleitblech (4) - wenigstens ein von einem Wärmeträgermedium zur Wärmemitnahme durchströmbares, vorzugsweise metallisches Rohr (3) angeordnet ist, wobei das wenigstens eine Rohr (3) wenigstens einen Rohrbogen und/oder einen Rohrverzweigungsbereich aufweist, **dadurch gekennzeichnet, dass** der Rohrbogen und/oder der Rohrverzweigungsbereich mit wenigstens einem Kopfstück (10) an dem Absorberblech gehalten ist.

## Beschreibung

Die Erfindung betrifft einen Absorber nach dem Oberbegriff des Anspruchs 1.

Ein derartiger Absorber ist aus der DE 101 42 752 bekannt. Der Absorber weist zur Durchleitung des Wärmeträgerfluids ein Mäanderrohr auf, das mittels eines Wärmeleitbleches unter einem Absorberblech befestigt ist. Lösungen dieser Art haben sich zwar an sich bewährt. Es besteht aber dennoch hinsichtlich der Optimierung des Wirkungsgrades weiterer Verbesserungsbedarf,

Es ist deshalb ausgehend von dem Stand der Technik, wie er in der DE 101 42752 beschrieben ist, die Aufgabe der Erfindung, den Wirkungsgrad der gattungsgemäßen Absorber zu verbessern.

Die Erfindung löst diese Aufgabe durch den Gegenstand des Anspruchs 1.

Danach ist/sind der Rohrbogen und/oder der Rohrverzweigungsbereich mit wenigstens einem Kopfstück an dem Absorberblech gehalten.

Hierdurch kommt es zu einer erhöhten Wärmeleitung auch im Bereich des Rohrbogens oder der Rohrbögen und/oder der Rohrverzweigungsbereiche, wodurch der Wirkungsgrad mit einfachen konstruktiven Mitteln insgesamt verbessert werden kann.

Besonders bevorzugt weist das Rohr eine Mäanderform mit geraden Rohrabschnitten und Mäanderwindungen auf, wobei wenigstens eine oder mehrere der Mäanderwindungen mit dem wenigstens einem Kopfstück an dem Absorberblech gehalten sind. Gerade bei einem Rohr mit Mäanderform mit relativ vielen bogenförmigen Abschnitten - den Mäanderwindungen - wirkt sich die Erfindung vorteilhaft auf den Wirkungsgrad aus. Analoges gilt für Absorber mit sich ein- oder mehrfach verzweigenden Rohren.

Vorzugsweise werden die Rohrbögen bzw. vorzugsweise die Mäanderwindungen am Absorberblech durch dehnungsausgleichende Kopfstücke, insbesondere Wärmeleitbleche, gehalten

Dies hat folgenden Hintergrund. Üblicherweise werden bei Absorbern der gattungsgemäßen Bauart die Mäanderwindungen, d.h. die stirnseitigen Rohrbögen zwischen den gerade verlaufenden Abschnitten des Rohres, nicht von dem Wärmeleitblech gehalten, da durch Wärmeausdehnung in alle drei Richtungen dem Mäanderrohr genügend Spiel gegeben werden muss. Würden die Mäanderwindungen ebenfalls wie in der DE 101 42 752 beschrieben, form- und kraftschlüssig eingepresst sein, würden die hohen Ausdehnkräfte zur Zerstörung der Verbindung zwischen Wärmeleitblech und Absorberblech führen. Analoges gilt für Rahrverzweigungsbereiche.

Auch dieses Problem löst die Erfindung.

Nach einer besonders bevorzugten Weiterbildung der Erfindung ist das erfindungsgemäße dehnungsausgleichende Wärmeleitblech mit einer Rohrkammer versehen, welche die Ausdehnungen in X- und Y-Richtung parallel zum Absorberblech aufnimmt. In Z-Richtung, also rechtwinklig zum Absorberblech, wird jedoch das Rohr gehalten und weist daher mindestens zwei Kontaktlinien auf. Derart bleibt stets ein gut wärmeleitender Kontakt vom Rohr insbesondere zu dem Absorberblech bestehen und es kann dennoch ein Dilatationsausgleich erfolgen.

Nach einer weiteren bevorzugten Variante der Erfindung wird das Mäanderrohr im Fertigungsprozess, d.h. beim Anpressen/Verkleben des Wärmeleitbleches, verformt, so dass zwei Rohrflächen entstehen. Hierdurch werden aus den Kontaktlinien Kontaktflächen, die den Wärmeübergang erhöhen.

Eine andere bevorzugte Ausführungsform der Erfindung zeichnet sich dadurch aus, dass das Wärmeleitblech zweiteilig ausgebildet, wobei mindestens ein zweiter Teil die Mäanderwindung bzw. den Rohrquerschnitt teilweise umschließt, aber beweglich ist, und ein erster Teil eine Rohrkammer aufweist. Hierdurch kann noch einmal der Wirkungsgrad erhöht werden.

Es ist auch möglich, die dehnungsausgleichenden Wärmeleitbleche für so genannte Harfenabsorber einzusetzen, da auch hier Wärmeausdehnungen in alle Richtungen an Rohrverzweigungsbereichen (z.B. T-Stück-Abzweigungen oder Rohrkreuzungen) aufgenommen werden müssen.

Vorteilhafte Ausgestaltungen der Erfindung sind den Unteransprüchen zu entnehmen.

Nachfolgend wird die Erfindung anhand von Ausführungsbeispielen unter Bezug auf die Zeichnung näher erläutert. Es zeigt:
- Fig. 1: einen Absorber für einen bekannten Kollektor von der sonnenabge- wandten Seite;
- Fig. 2: einen Schnitt durch einen Abschnitt eines bekannten Absorbers;
- Fig.3 und 4: Teilausschnitte und Seitenansichten der Figur 1 mit Richtungsangaben in X-, Y- und Z- Richtung;
- Fig. 5 und 6: eine Darstellung der Dehnung des Rohres der Anordnung aus Fig. 3 und 4 bei höheren Temperaturschwankungen.
- Fig. 7 und 8: zu Fig. 5 und 6 analoge, aber mit jeweils einem Kopfstück versehene Anordnungen;
- Fig. 9 bis 11: Ansichten verschiedener Kopfstücke; und
- Fig. 12 bis 16: Ansichten von Abschnitten weiterer mit Kopfstücken versehener Ab- sorber.

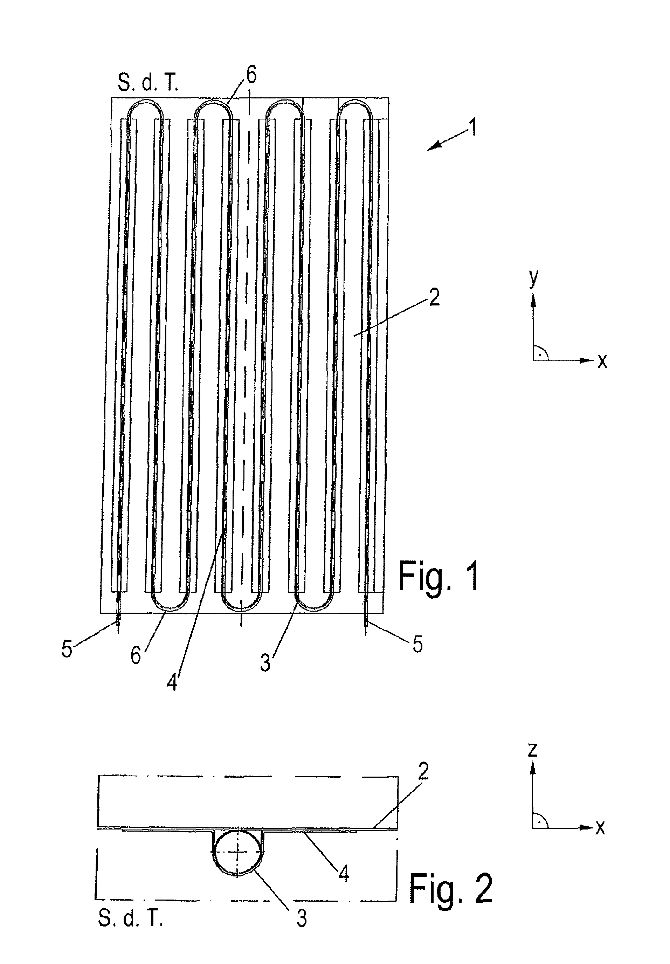

Figur 1 zeigt einen Absorber für einen Kollektor von der sonnenabgewandten Seite, also von unten.

Der Absorber 1 weist ein Absorberblech 2 auf, das vorzugsweise aus Aluminium besteht und mit einer zur Sonnenseite hin beschichteten Oberfläche zur besseren Absorption der Sonnenstrahlen versehen sein kann (hier nicht dargestellt).

In Hinsicht auf die Richtung der Sonnenlichteinstrahlung unter der ebenen Fläche des Absorberblechs 2 ist wenigstens ein Rohr 3 angeordnet, welches dazu ausgelegt ist, für einen Energietransport durch Wärmemitnahme von einem Wärmeträgermedium, insbesondere einem Fluid, wie einem Gas oder einer Flüssigkeit, durchströmt zu werden.

Nach dem Ausführungsbeispiel der Fig. 1 ist das Rohr 3 für das Wärmeträgermedium mäanderförmig ausgebildet. Diese Anordnung ist rein beispielhaft zu verstehen. So könnten auch mehrere Rohre z,B, in Harfenform unter dem Absorberblech angeordnet sein (hier nicht dargestellt).

Als das Ausgangswerkstück zur Herstellung der Absorber werden vorzugsweise handelsübliche, im Querschnitt runde Metall-, insbesondere Kupferrohre, verwendet, die relativ leicht gebogen werden können und an deren Rohrenden 5 leicht handelsübliche Verbindungselemente angeschlossen werden können.

Das Rohr 3 wird ferner in den Abschnitten zwischen den Mäanderwindungen 6 mit mindestens einem Wänneleitblech, vorzugsweise mit einer Vielzahl von geraden, profilähnlichen Wärmeleitblechen 4, unter dem Absorberblech 2 gehalten.

Nach einer besonders bevorzugten Ausgestaltung sind die Wärmeleitbleche 4 jeweils streifenfönnig ausgelegt, wobei jedem geraden Abschnitt des Mäanders in Längsrichtung vorzugsweise ein streifenförmiges Wärmeleitblech zugeordnet ist und wobei die jeweils eine Biegung um 180° beschreibenden Mäanderwindungen 6 nicht von den Wärmeleitblechen 4 abgedeckt sind.

Diese Anordnung hat den Vorteil, dass sich bei thermischer Ausdehnung keine Spannungen aufbauen: die Rohre 3 werden derart kraftschlüssig zwischen Absorberblech 2 und Wärmeleitblech 4 gehalten, dass sie eine axiale Verschiebung zulassen. Die Wärmeleitbleche 4 sind daher in ihrer länglichen Ausrichtung immer kürzer als das Absorberblech 2.

Figur 2 zeigt einen Teilschnitt durch einen Absorber nach dem Stand der Technik der Fig. 1 mit einem ebenen Absorberblech 2, unter dem ein Rohr 3 für ein Wärmeträgermedium angeordnet ist, welches durch ein Wärmeleitblech 4 gehalten wird.

Dabei berührt das Rohr 3 das wärmeaufnehmende Absorberblech 2 quasi nur punktuell bzw. auf einer Linie. Dies lässt sich ggf. dadurch optimieren, dass das Rohr 3 abschnittsweise abgeflacht ausgebildet wird, so dass eine größere Anlagefläche zwischen dem Rohr 3 und dem Wärmeleitblech 4 geschaffen wird (hier nicht dargestellt)..

Wie zu erkennen, sind im Bereich der Mäanderwindungen 6 nach dem Stand der Technik der Fig. 1 und 2 sowie 3 und 4 keine Wärmeleitbleche 4 vorgesehen. Gerade in diesem Bereich findet damit nur ein sehr schlechter Wärmeübergang zwischen dem Rohr 3 und dem Wärmeleitblech 4 statt.

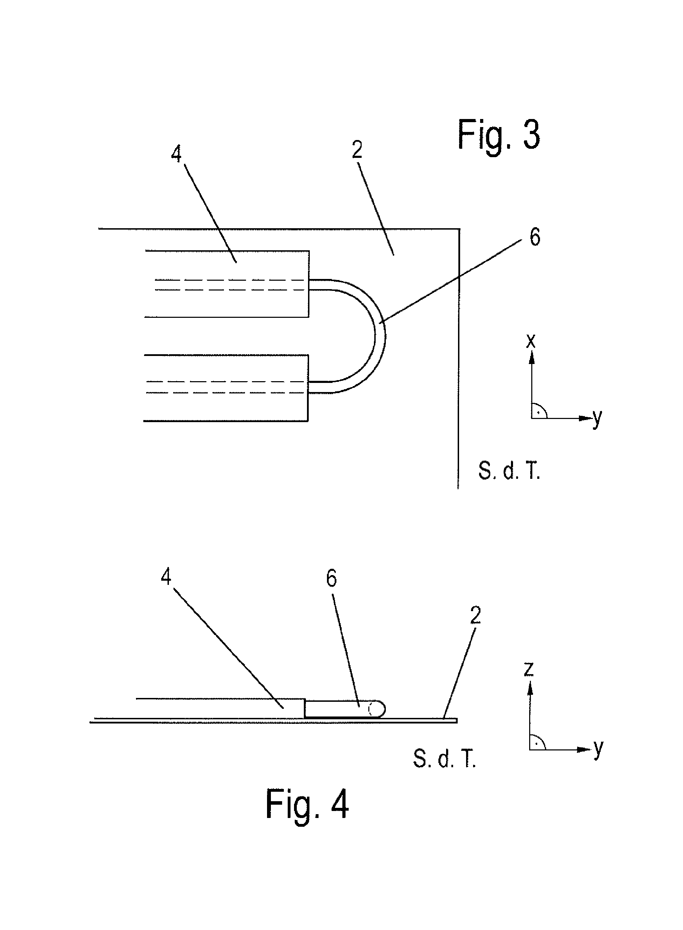

Die Figuren 3 und 4 zeigen dabei Teilausschnitte und Seitenansichten der Figur 1 mit Richtungsangaben in X-, Y- und Z- Richtung zum besseren Verständnis, wobei die Richtungen X und Y die Absorberebene aufspannen und Y die axiale Richtung der geraden Mäanderrohrabschnitte zeigt. Z verläuft entsprechend rechtwinklig zur Absorberfläche.

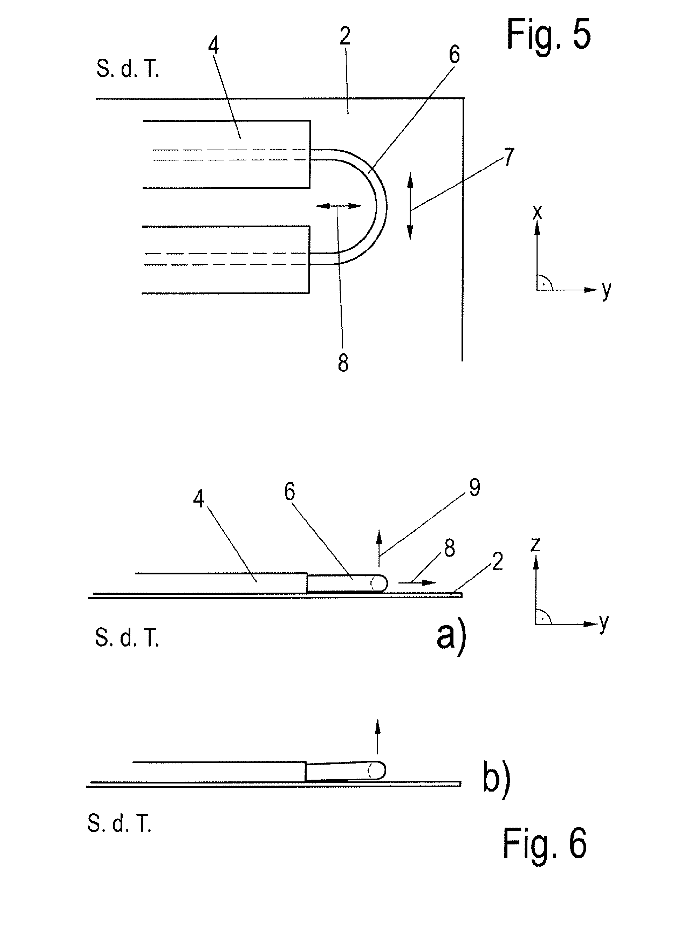

Die Figuren 5 und 6 entsprechen den Figuren 3 und 4 und zeigen zusätzlich die Dehnungsrichtungen des Rohres, welches Temperaturschwankungen von bis zu mehr als 200°C ausgesetzt sein kann.

Die durch diese Temperaturschwankungen bedingten Längenänderungen sind erheblich und führen in Extremfällen zum teilweisen Ablösen der Wärmeleitbleche in deren Endbereichen bei den Mäanderwindungen 6.

Die Längenänderungen finden in alle drei Raumrichtungen X, Y und Z statt.

Besonders bedeutend ist insbesondere die Ausdehnung 9 in Z-Richtung (senkrecht zu den geraden Abschnitten der Rohre 3). Durch diese Ausdehnung hebt das Rohr 3 ggf. sogar von dem Absorberblech 2 ab, so dass kein Wärmeübergang zwischen dem Rohr 3 und dem Absorberblech 2 durch direkten Kontakt gegeben ist.

Zusammengefasst besteht damit die Problematik, dass sich das Rohr 3 bereichsweise vom Absorberblech abheben oder sogar lösen kann, so dass in diesem Bereich kein direkter Wärmeübergang zwischen den Rohr 3 und dem Absorberblech 2 mehr vorliegt.

Dieses Problem wird dadurch gelöst, dass wenigstens eine der Mäanderwindungen oder - besser - sämtliche der Mäanderwindungen 6 mittels jeweils eines einzelnen Kopfstücks 10 oder jeweils mittels mehrerer Kopfstücke 10 an dem Absorberblech 2 dieses im Bereich des Rohrbogens (bzw. hier der Mäanderwindungen 6) kontaktierend gehalten sind.

Das Kopfstück 10 ist vorzugsweise als ein Wänneleitblech ausgebildet. Die Montage kann auf dem Absorberblech erfolgen, vorzugsweise werden das Kopfstück 10 und das Absorberblech im in einem Pressverfahren mit einander verklebt.

Das Kopfstück 10 in seiner Ausgestaltung als Wärmeleitblech weist zwei Auflagebereiche 10a und 10b zur Auflage auf dem Absorberblech 2 auf sowie eine Einprägung, welche eine Rinne 10c ausbildet, die wiederum im auf dem Absorberblech 2 montierten Zustand im Zusammenspiel mit der Oberfläche des Absorberbleches 2 eine Hohlkammer 13 zur Aufnahme der jeweiligen Mäanderwindung 6 ausbildet.

Das Kopfstück 10 ist derart stabil ausgelegt und fest auf der Oberfläche des Absorberbleches 2 festgelegt, dass die Mäanderwindung 6 in dem Bereich, in welchem er von dem Kopfstück abgedeckt ist (ob über die gesamten 180° oder über einen weniger großen Teil der Mäanderwindung) an dem Absorberblech in Kontakt gehalten ist. Vorzugsweise erfolgt das Festlegen des Kopfstückes 10 durch ein Festkleben der Bereiche 10a und 10b an dem Absorberblech. Andere Befestigungsmethoden sind aber ebenso denkbar. Hierzu gehören Schweißverfahren, Löten oder eine Befestigung mit Hilfsmitteln, wie zum Beispiel Nieten.

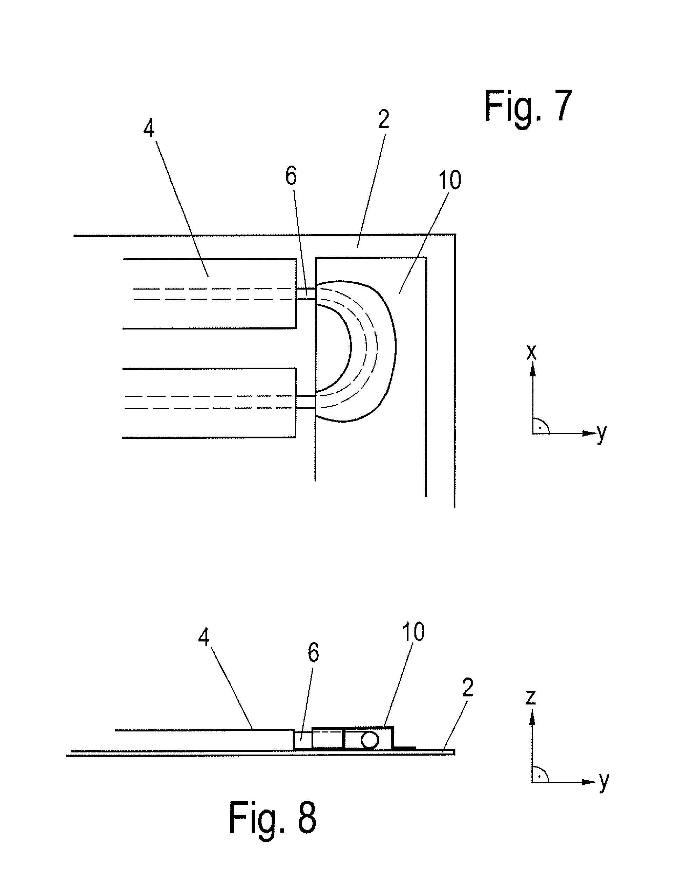

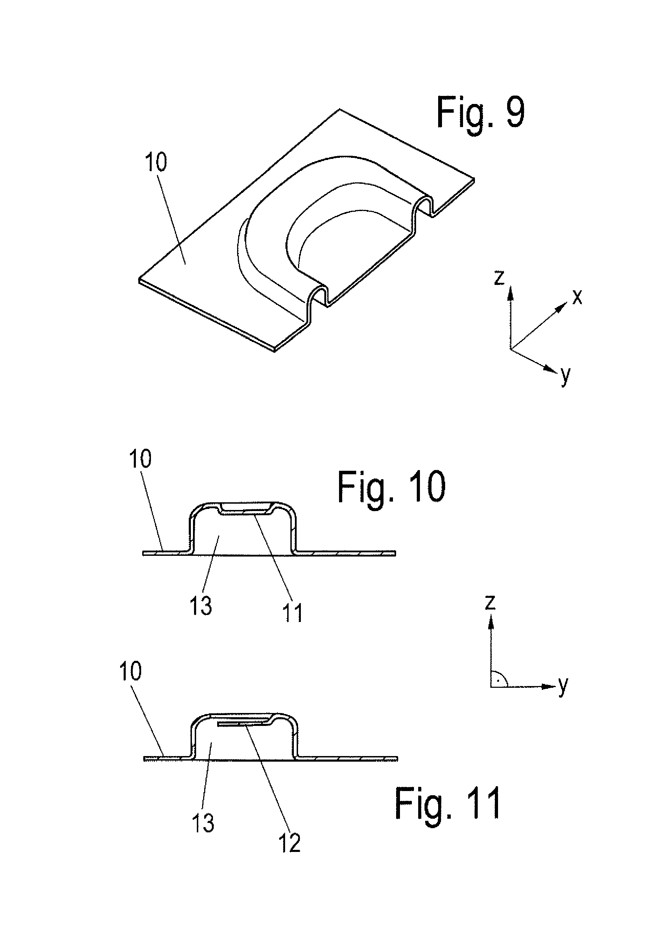

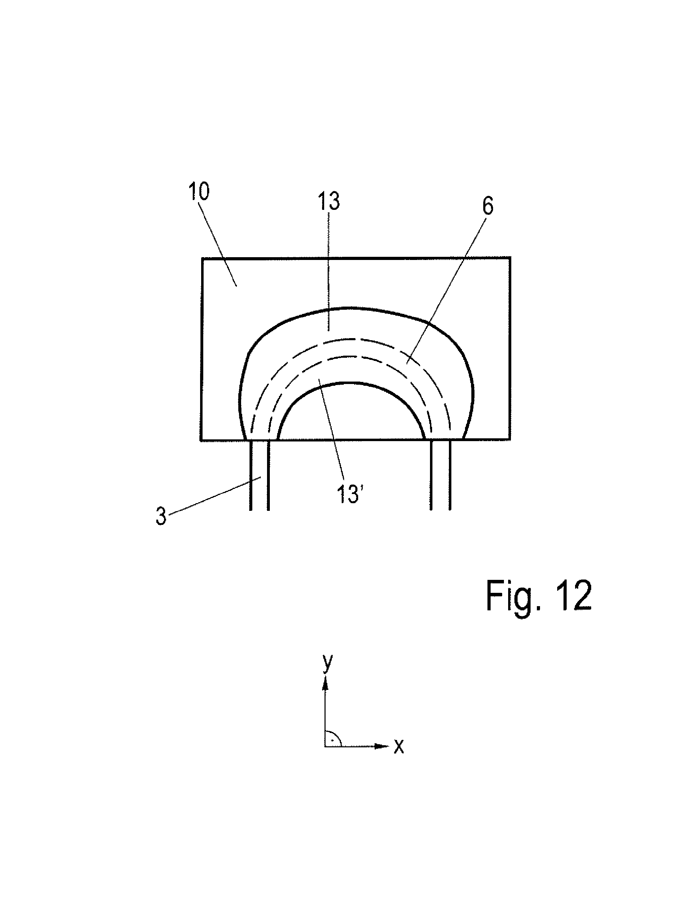

Die Figuren 7 und 8 zeigen eine mögliche Anordnung eines Kopfstückes als Wärmeleitblech, das in Figur 9 in einer isometrischen Darstellung und in Figur 12 vergrößert dargestellt ist.

Figur 9 zeigt ein Kopfstück-Wärmeleitblech 10, das eine der Mäanderwindungen 6 voll umschließt. Die sich dabei durch die Rinne 10c bildende Rohrkammer 13 weist dabei ein Volumen auf, das geringfügig größer ist als das zu umschließende Rohrvolumen. Selbstverständlich sind auch Kopfstücke 10 denkbar, welche die Form einer Spange aufweisen und die nur einen kleinen Bereich der Mäanderwindung umgreifen bzw. umschließen.

Das Kopfstück 10 kann sowohl für einen Teil einer einzigen Mäanderwindung, für eine ganze Mäanderwindung oder für mehrere Mäanderwindungcn ausgelegt sein. So kann das Kopfstück 10 auch sämtliche Mäanderwindungen einer Seite der Mäanderanordnung aus Fig. 1 am Absorberblech 2 fixieren.

Die Grundkontur des Kopfstückes 10 ist vorzugsweise rechteckig.

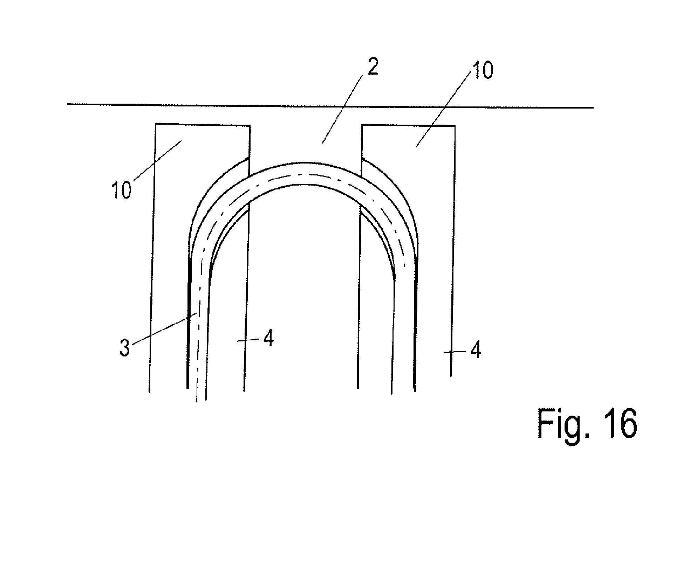

Das Kopfstück 10 kann zudem auch einstückig mit dem Wärmeleitblech 4 verbunden sein (siehe Fig. 16). Nach Fig. 16 sind in Verlängerung der Wärmeleitbleche 4 zum Abdecken der geraden Abschnitte der Rohre 3 die Kopfstücke direkt als Verlängerungsabschnitte an den Wärmeleitblechen ausgebildet. Damit wird jedenfalls ein Teilbereich des jeweiligen Rohrbogens abgedeckt. Ggf. kann im Abstandsbereich zwischen den zwei Kopfstücken 10 noch ein weiteres Kopfstückblech angeordnet werden.

Es kann ferner selbst einstückig oder mehrstückig ausgebildet sein.

Die Figuren 10 und 11 zeigen vorteilhafte Ausgestaltungen des Kopfstücks 10, das im inneren Bereich, also zum Rohr hin (hier nicht dargestellt) Vorkehrungen bzw. Mittel aufweist, die das Rohr auf das Absorberblech drückt. So ist in Figur 10 eine Prägung 11 im Schnitt dargestellt, die das Rohr unter Spannung hält, während in Figur 11 eine Lasche 12 die gleiche Aufgabe erfüllt. Ausprägungen 11 und Laschen 12 oder ähnliche Vorkehrungen können an einem Punkt oder in einem größeren Bereich einzeln oder in einer Vielzahl an dem Kopfstück 10 ausgebildet sein.

Figur 12 zeigt das erfindungsgemäßen Kopfstück als Wärmeleitblech, in dem das Rohr 3 mit seiner Mäanderwindung 6 eingelegt ist. Die Mäanderwindung 6 befindet sich dabei in einer Rohrkammer 13, die so ausgelegt ist, dass sie alle Längenänderungen des Rohres 3 in X- und in Y-Richtung aufnehmen kann, aber verhindert, dass das Rohr von dem Absorberblech abhebt, also sich nicht in Z-Richtung bewegen kann. Hierdurch hat das Rohr auch im Bereich der Mäanderwindungen mindestens 2 Kontaktlinien, nämlich zu dem Kopfstück 10 und zu dem Absorberblech 2.

Diese Lösung ist besonders vorteilhaft, denn sie ist einerseits dazu geeignet, die Mäanderwindung 6 in Kontakt zu dem Absorberblech 2 zu halten und sie ist andererseits dazu ausgelegt, dilatationsbedingte Relativbewegungen Längenänderungsdifferenzen zwischen dem Absorberblech 2 und dem Rohraufzunehmen.

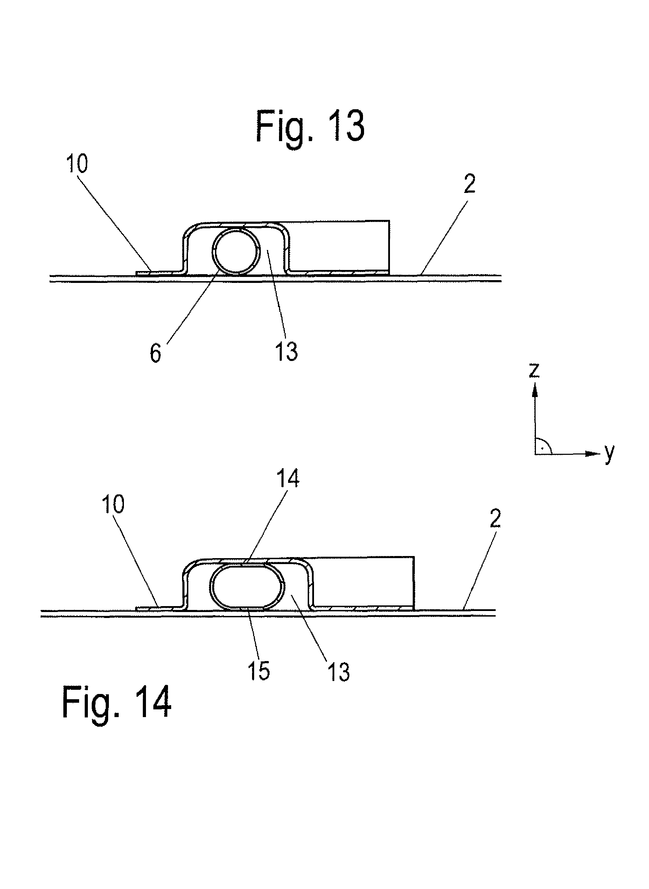

Figur 13 zeigt noch einmal einen Schnitt durch das Kopfstück 10 in einer einfachen Ausführung zur Gegenüberstellung mit Figur 14, in einer bevorzugten Variante.

In Figur 14 wird durch den Verbindungsvorgang bzw. Montagevorgang des Kopfstücks 10 auf dem Absorberblech 2 durch Pressen zusätzlich das Rohr 3 abgeflacht. Hierdurch bilden sich an dem Rohr zwei ebene Flächen aus, die den Wärmeübergang zusätzlich verbessern.

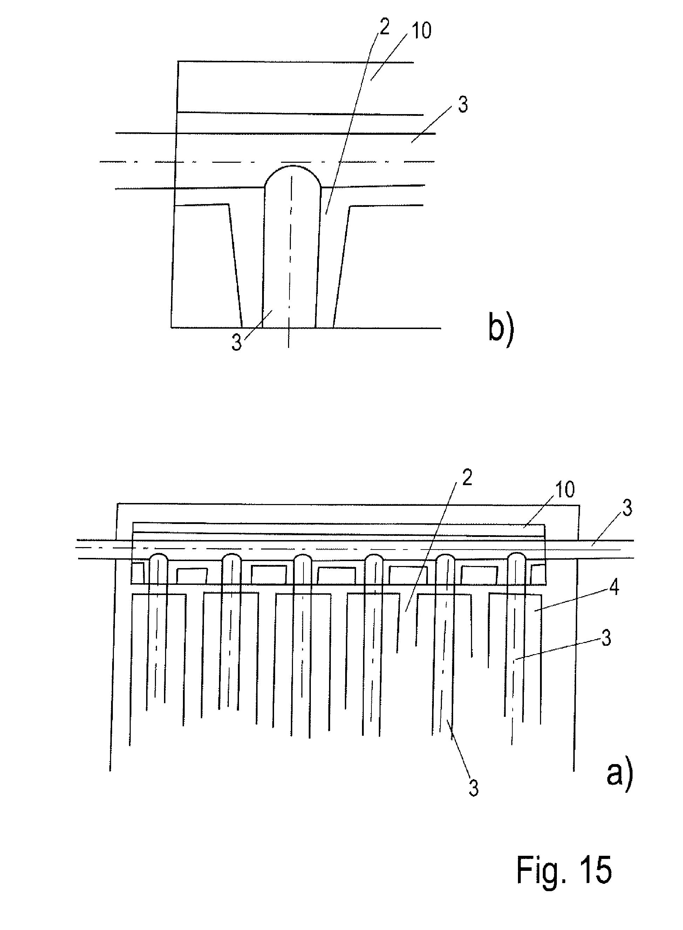

Nach Fig. 15a und der Detailansicht 15b werden die Kopfstücke 10 dazu genutzt, einen T-Stückverzweigungsbereich an wenigstens einem Verzweigungsbereich eines oder mehrerer

Rohre 3 eines Harfenabsorber angeordnet. Bei einem derartigen Verzweigungsbereich kann es sich um eine Abzweigung nach Art eines T handeln oder auch um einen Kreuzungsbereich zweier Rohre. Im Verzweigungsbereich bewährt sich das Kopfstück 10 wie an einem Rohrbogen. Insbesondere sind sämtliche Varianten (Dilatationsausgleich und so weiter), Kammerbemessung an einem Verzweigungsbereich wie im Bereich eines Rohrbogens realisierbar.

**Bezugsziffern**
- 1: Absorber
- 2: Absorberblech
- 3: Rohr
- 4: Wärmeleitblech
- 5: Rohrende
- 6: Mäanderwindung
- 7: Ausdehnung X-Richtung
- 8: Ausdehnung Y-Richtung
- 9: Ausdehnung Z-Richtung
- 10: Kopfstück
- 10a,: b Auflagebereiche (10a und 10b)
- 10c: Rinne
- 11: Prägung
- 12: Lasche
- 13: Rohrkammer
- 14: Fläche
- 15: Fläche

## Patentansprüche

1. Absorber (1), der ein zumindest abschnittsweise ebenes bzw. eine ebene Fläche (8b) aufweisendes Absorberblech (2) aufweist, an dem - vorzugsweise mit wenigstens einem Wärmeleitblech (4) - wenigstens ein von einem Wärmeträgermedium zur Wärmemitnahme durchströmbares, vorzugsweise metallisches Rohr (3) angeordnet ist, wobei das wenigstens eine Rohr (3) wenigstens einen Rohrbogen und/oder einen Rohrverzweigungsbereich aufweist, **dadurch gekennzeichnet, dass** der Rohrbogen und/oder der Rohrverzweigungsbereich mit wenigstens einem Kopfstück (10) an dem Absorberblech gehalten ist.

2. Absorber nach Anspruch 1, **dadurch gekennzeichnet, dass** das Rohr (3) eine Mäanderform mit geraden Rohrabschnitten und Mäanderwindungen (6) aufweist und dass wenigstens eine oder mehrere der Mäanderwindungen (6) mit wenigstens einem Kopfstück (10) an dem Absorberblech gehalten ist/sind.

3. Absorber nach einem der vorstehenden Ansprüche, **dadurch gekennzeichnet, dass** das Kopfstück (10) nach Art eines Wärmeleitbleches ausgestaltet ist.

4. Absorber nach einem der vorstehenden Ansprüche, **dadurch gekennzeichnet, dass** das wenigstens eine Kopfstück (10) unbeweglich am Absorberblech (2) befestigt ist und derart ausgestaltet ist, dass sich der jeweilige Rohrbogen (6) und/oder der Rohrverzweigungsbereich im Kopfstück (10) parallel zum Absorberblech (2) begrenzt bewegen kann.

5. Absorber nach einem der vorstehenden Ansprüche, **dadurch gekennzeichnet, dass** das Kopfstück (10) zwei Auflagebereiche (10a und 10b) zur Auflage auf dem Absorberblech (2) aufweist sowie eine Rinne (10c), welche im auf dem Absorberblech (2) montierten Zustand im Zusammenspiel mit der Oberfläche des Absorberbleches eine Hohlkammer (13) zur Aufnahme des Rohrbogens oder des Verzweigungsbereiches ausbildet.

6. Absorber nach einem der vorstehenden Ansprüche, **dadurch gekennzeichnet, dass** das Kopfstück (10) derart stabil ausgelegt und auf der Oberfläche des Absorberbleches (2) festgelegt ist, dass die Mäanderwindung (6) in dem Bereich, in welchem sie von dem Kopfstück (6) abgedeckt ist, an dem Absorberblech (2) dieses kontaktierend gehalten ist.

7. Absorber nach einem der vorstehenden Ansprüche, **dadurch gekennzeichnet, dass** die Hohlkammer (13) ein Volumen aufweist, welches derart geringfügig größer ist als das zu umschließende Rohrvolumen, so dass Relativbewegungen des Rohres (3) an dem Absorberblech ausgleichbar sind.

8. Absorber nach einem der vorstehenden Ansprüche, **dadurch gekennzeichnet, dass** das Kopfstück (10) dazu ausgelegt ist, einen Teil oder einen gesamten Mäanderbogen über 180° an dem Absorberblech (2) in Kontakt zu halten.

9. Absorber nach einem der vorstehenden Ansprüche, **dadurch gekennzeichnet, dass** die Rohrkammer (13) dazu ausgelegt ist, Längenänderungen des Rohres (3) in X-und in Y-Richtung parallel zum Absorberblech aufzunehmen ohne dass sich das Rohr von dem Absorberblech abheben kann.

10. Absorber nach einem der vorstehenden Ansprüche, **dadurch gekennzeichnet, dass** das wenigstens eine Wärmeleitblech (4) und das wenigstens ein Absorberblech (2) mittels einer Klebeverbindung mit einem Klebstoff miteinander verbunden sind wobei dem Klebstoff vorzugsweise wärmeleitende Stoffe, insbesondere Metallsplitter oder -fasern beigemengt sind.

11. Absorber nach einem der vorstehenden Ansprüche, **dadurch gekennzeichnet, dass** zwischen dem Absorberblech (2) und dem wenigstens einen Rohr (3) kein Klebstoff angeordnet ist.

12. Absorber nach einem der vorstehenden Ansprüche, **dadurch gekennzeichnet, dass** jedem geraden Rohrabschnitt des Mäanders in Längsrichtung jeweils ein streifenförmiges Wärmeleitblech zugeordnet ist.

13. Absorber nach einem der vorstehenden Ansprüche, **dadurch gekennzeichnet, dass** die Mäanderwindungen (6) am Absorberblech (2) durch dehnungsausgleichende Wärmeleitbleche gehalten sind.

14. Absorber nach einem der vorstehenden Ansprüche, **dadurch gekennzeichnet, dass** das Mäanderrohr in wenigstens einem Umfangsbereich oder in zwei Umfangsbereichen abgeflacht ausgebildet ist, so dass sich jeweils eine Anlagefläche zum Kopfstück (10) und/oder zum Absorberblech (2) ausbildet.

15. Absorber nach einem der vorstehenden Ansprüche, **dadurch gekennzeichnet, dass** das Kopfstück (10) als einstückiges Blech ausgebildet oder dass das Kopfstück (10) mehrstückig, insbesondere zweistückig ausgebildet ist, wobei mindestens ein zweiter Teil die Mäanderwindung bzw. den Rohrquerschnitt teilweise umschließt, aber beweglich ist, und einem ersten Teil, der wie die oben beschrieben Variante ausgebildet ist, also eine Rohrkammer aufweist.

16. Absorber nach einem der vorstehenden Ansprüche, **dadurch gekennzeichnet, dass** die Kopfstücke (10) an wenigstens einem Verzweigungsbereich eines Rohres (13) eines Harfenabsorber angeordnet sind.

17. Absorber nach einem der vorstehenden Ansprüche, **dadurch gekennzeichnet, dass** das Kopfstück (10) im inneren Bereich zum Rohr hin (hier nicht dargestellt) Vorkehrungen bzw. Mittel aufweist, die das Rohr auf das Absorberblech drücken, wobei da die Mittel, welche das Rohr auf das Absorberblech drücken, als Ausprägungen (11) und/oder Laschen (12) ausgebildet sind.
